# EUROPEAN PATENT APPLICATION

(11) **EP 0 842 890 A1**
(43) Date of publication of application: **20.05.1998**
(21) Application number: 97308936.0
(22) Date of filing: 06.11.1997
(51) Int. Cl.: B66C 9/14, H02K 41/025

(54) **Cranes with traversable trolleys**

(30) Priority: 15.11.1996 JP 304780/96; 15.11.1996 JP 304781/96
(71) Applicant: ISHIKAWAJIMA-HARIMA JUKOGYO KABUSHIKI KAISHA, Chiyoda-ku Tokyo-to (JP)
(72) Inventor: Fujii, Noriyuki, Tokyo-to (JP); Takagi, Yoshiro, Tokyo-to (JP); Kawase, Akira, Higashikurume-shi, Tokyo-to (JP); Uematsu, Kazuo, Yokohama-shi, Kanagawa-ken (JP)
(74) Representative: Jennings, Nigel Robin

(57) **Abstract**

A crane includes one or more girders (6), a trolley (7) mounted on the girder(s) to be movable along their length in a traverse direction and linear induction motor means (24) arranged to move the trolley (7) along the girder(s). The linear induction motor means (24) includes a primary component in the form of coils (26) and a secondary component in the form of reaction plates (25). One of these components is arranged on the girder(s) (6) over the traverse range of the trolley (7) and the other of the components is arranged on the trolley (7) and opposed to the said one of the components in a closely spaced relationship.

## Description

The present invention relates to cranes with traversable trolleys and is concerned with that type of crane which includes one or more girders, a trolley mounted on the girder(s) to be movable along their length in a traverse direction and actuating means arranged to move the trolley along the girder(s).

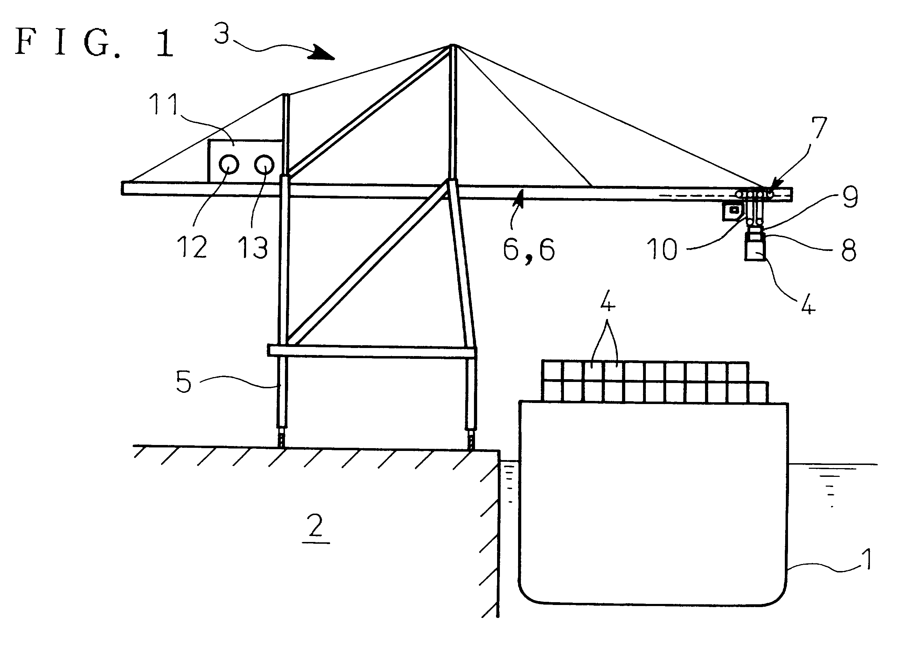

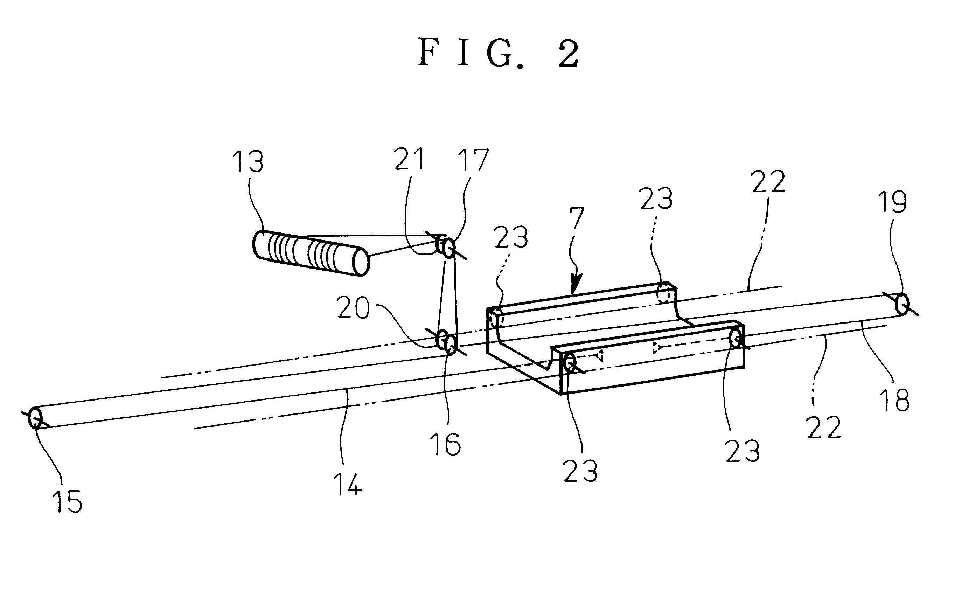

A known container crane is illustrated in Figures 1 and 2 of the accompanying drawings, in which:
Figure 1 is a schematic side view of the crane; and
Figure 2 is a schematic perspective view of the system for traversing the crane trolley.

The container crane 3 is intended for loading and unloading containers 4 onto and from a container ship 1 moored at a quay 2.

The container crane 3 comprises legs 5 adapted to run along the quay 2, a pair of girders 6 on top of the legs 5 and extending toward the sea and a trolley 7 mounted on and between the girders 6 and adapted to be traversed or moved in a traverse direction along the girders.

Suspended on the trolley 7 is a head block 9, connected to which is a spreader 8 for gripping containers 4. The spreader 8 can be hoisted up and down by winding and unwinding a rope 10 by means of a hoist drum 12 in a machine room 11.

When a container 4 is to be unloaded from the container ship 1 by the container crane 3, the trolley 7 is traversed to a position above the container ship 1 and the spreader 8 is hoisted down from the trolley 7 to grip the container 4. Then, the spreader 8 is hoisted up and the trolley 7 is traversed towards an unloading position on the quay 2 and is hoisted down to position the container 4 on the quay 2.

The trolley 7 is traversed by means of ropes, using a traverse drum 13 in the machine room 11. More specifically, as shown in Figure 2, a rope 14 tied to one end of the trolley 7 passes round a sheave 15 at one longitudinal end of the girders 6 and round sheaves 16 and 17 and is wound around the traverse drum 13. A rope 18 tied to the other end of the trolley 7 passes round a sheave 19 at the other longitudinal end of the girders 6 and round sheaves 20 and 21 and is wound in the opposite direction around the traverse drum 13. Rotation of the traverse drum 13 causes the two ropes 14 and 18 to be wound and unwound, respectively, or vice versa so that the trolley 7 is traversed longitudinally of the girders 6.

In Figure 2, reference numeral 22 represents rails laid longitudinally of the girders 6 and 23 represents wheels of the trolley 7 which run on the rails 22.

However, the known traversing system comprising ropes 14 and 18 pulled as described above cannot traverse the trolley 7 at high speed. There has, therefore, been substantial demand for the ability to increase the traversing speed of the trolley so as to reduce the cycle time of loading and unloading operations.

Furthermore, in the known traversing system, the actual amount of the rope 14 or 18 which is unwound tends to lose its proportional relationship with the number of revolutions (angle of rotation) of the traverse drum 13 because of elongation in the length of the ropes and/or wear of the various sheaves over the course of time, thereby resulting disadvantageously in inaccurate control of the traverse position of the trolley.

Moreover, when the speed of rotation of the traverse drum is changed, it takes some time until the actual traverse speed of the trolley changes also. This time lag results in poor responsiveness to a speed control command. As a result, acceleration or deceleration of the trolley cannot be effected at the correct timing for the purpose of suppressing swing or oscillation of a suspended container.

The ropes 14 and 18 tend to wear out after a relatively short time and must be replaced every six to twelve months. This means that additional expense and labour are needed. Furthermore, the traversing system includes many mechanical moving parts such as the drive motor for the drum 13, reduction gears and the sheaves 15, 16, 17, 19, 20 and 21 which require frequent maintenance and inspection, which represents a further burden on the personnel.

It is the object of the present invention to provide a system for traversing a trolley on a crane which enables the trolley to be traversed at higher speed and with increased accuracy in both position control and in swing-suppressing control and in which the expense and labour associated with maintenance and inspection are reduced.

According to the present invention, a crane of the type referred to above is characterised in that the actuating means comprises linear induction motor means including a primary component in the form of coils and a secondary component in the form of reaction plates, one of the primary and secondary components being arranged on the girder(s) over the traverse range of the trolley, the other of the primary and secondary components being arranged on the trolley and opposed to the said one of the components in a closely spaced relationship.

Thus in the crane in accordance with the present invention the traversing system for the trolley is constituted essentially by a linear induction motor which completely replaces the ropes, sheaves and traverse drum which were necessary in the known crane.

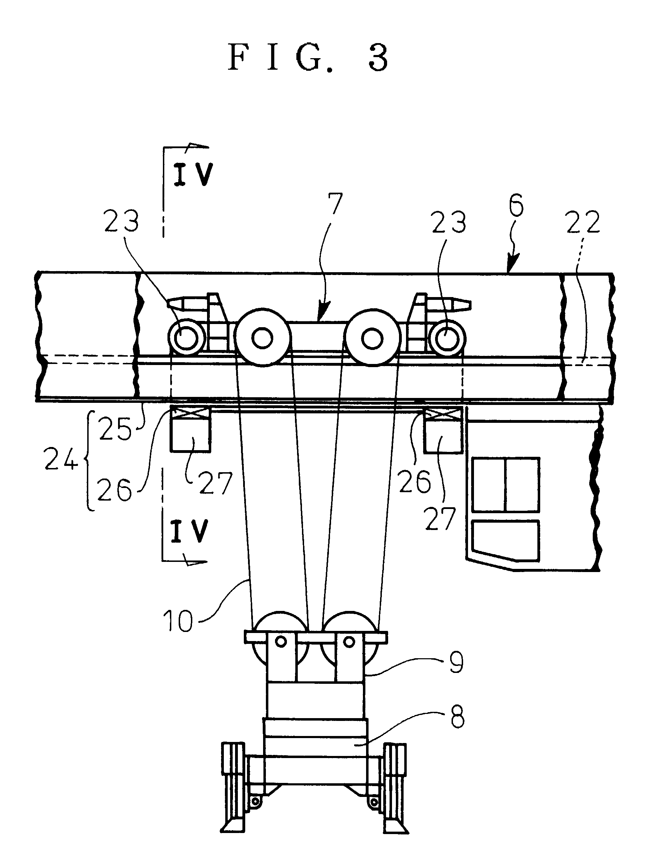

Further features and details of the present invention will be apparent from the following description of certain specific embodiments which is given by way of example with reference to Figures 3 to 10 of the accompanying drawings, in which:
Figure 3 is a side view of a first embodiment of the present invention;

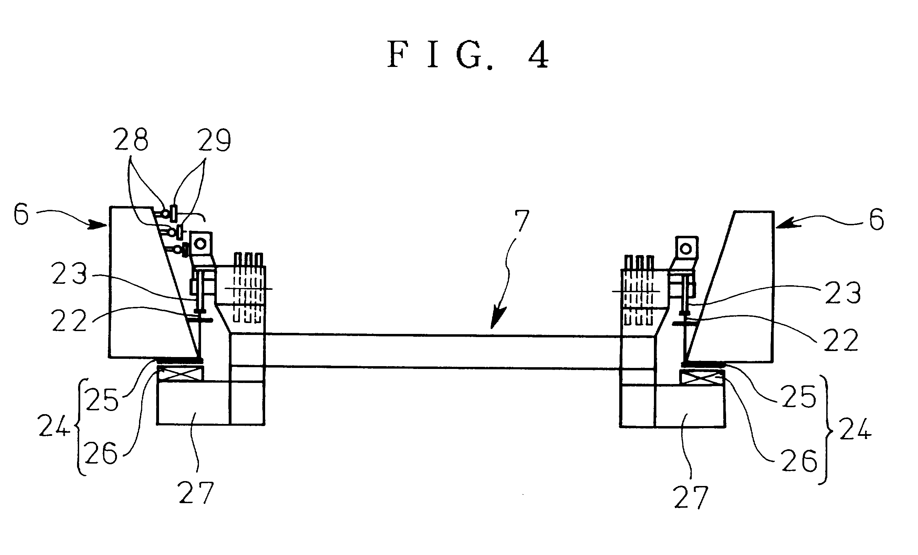

Figure 4 is a side view in the direction of the arrows IV in Figure 3;

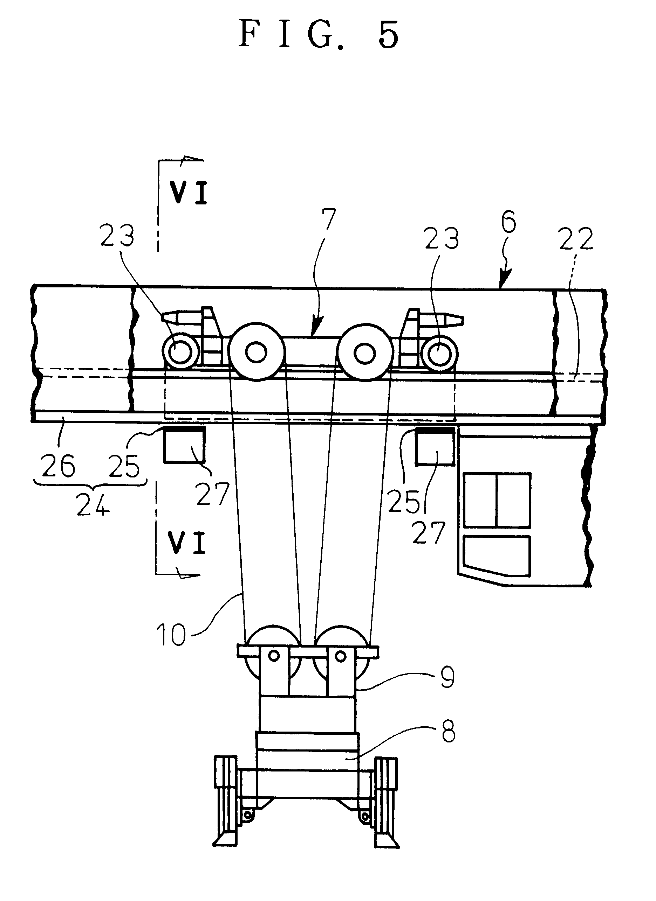

Figure 5 is a side view of a second embodiment of the present invention;

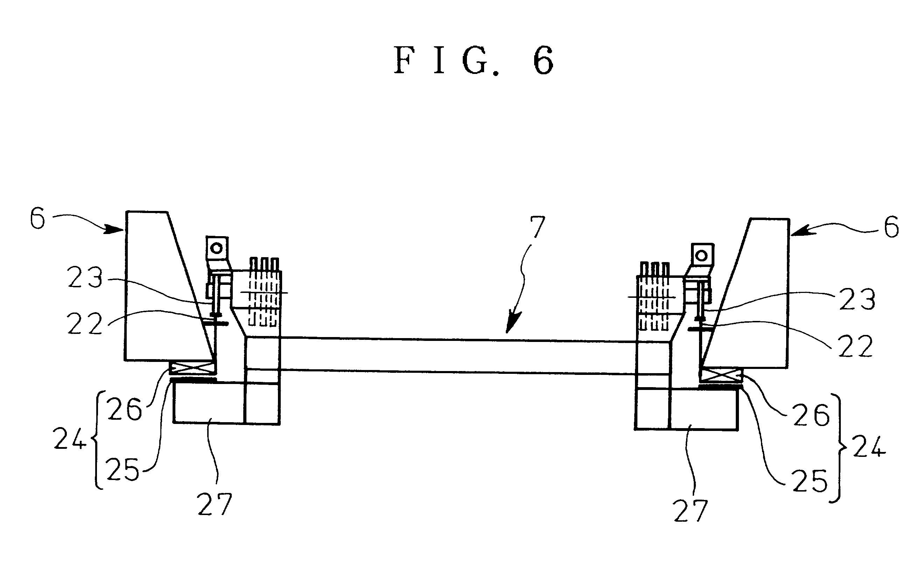

Figure 6 is a view in the direction of the arrows VI in Figure 5;

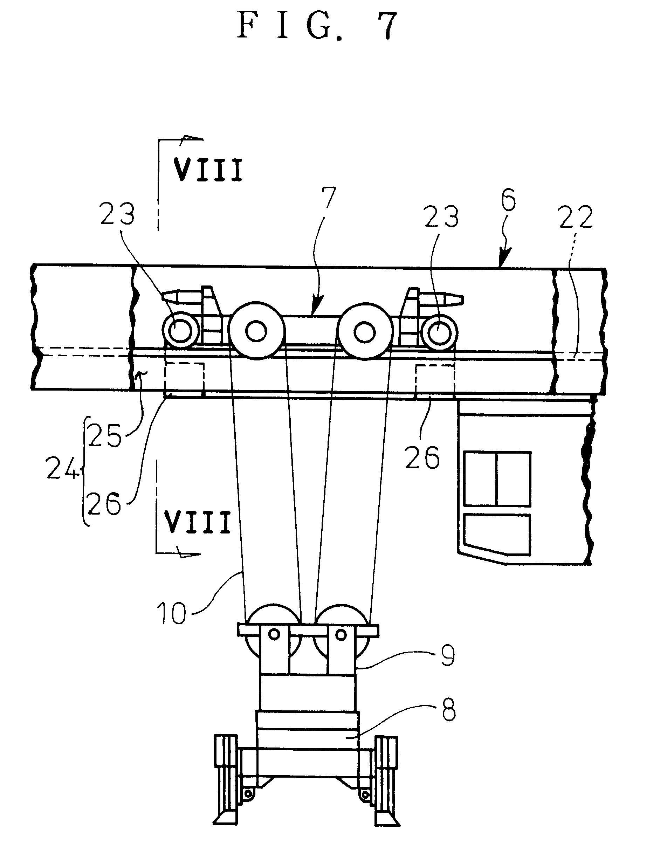

Figure 7 is a side view of a third embodiment of the present invention;

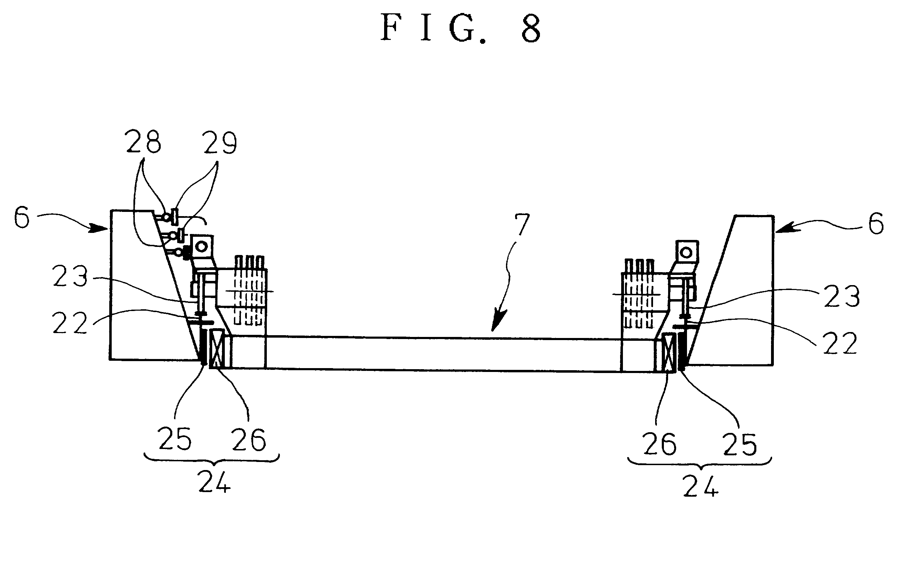

Figure 8 is a view in the direction of the arrows VIII in Figure 7;

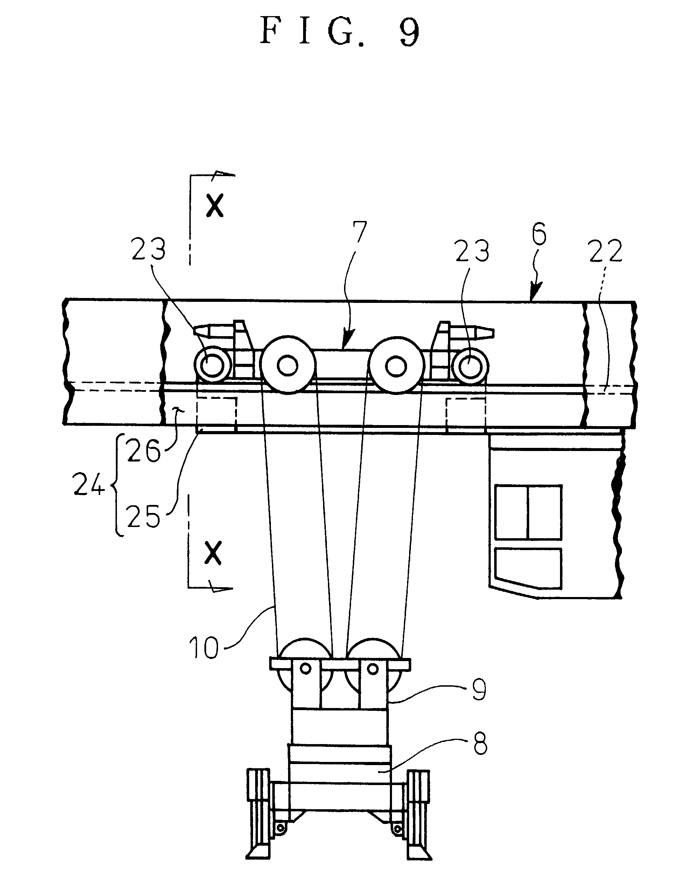

Figure 9 is a side view of a fourth embodiment of the present invention; and

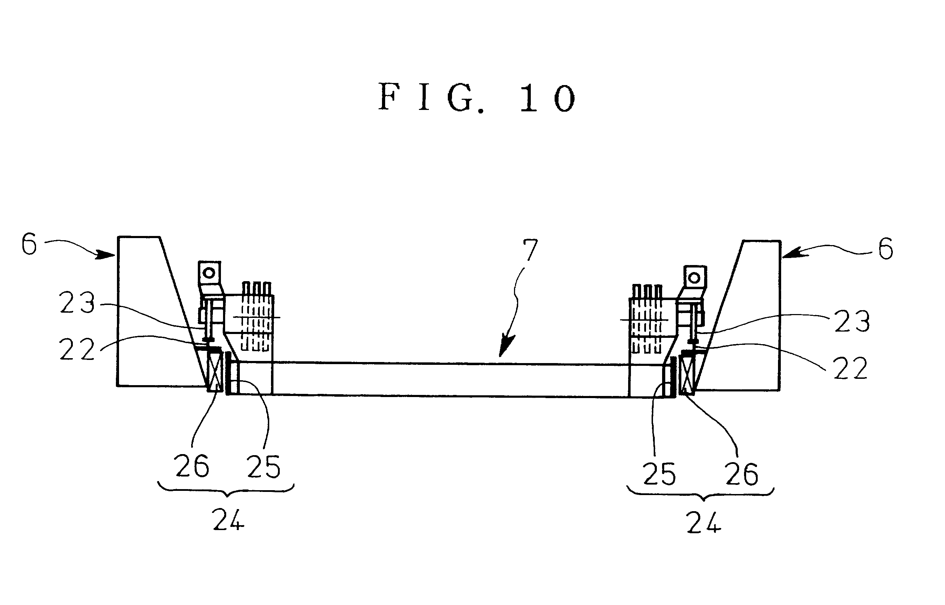

Figure 10 is a view in the direction of arrows X in Figure 9.

Those components which are the same as those in Figures 1 and 2 are referred to by the same reference numerals.

As shown in Figures 3 and 4, each of the girders 6 of the crane has a reaction plate 25 which is attached to its lower surface over the traverse range of the trolley 7 and which constitutes the secondary component of linear induction motor means 24. The trolley 7 carries coils 26 which are respectively mounted at the four corners of the trolley 7 via brackets 27 and which constitute the primary component of the induction motor means 24. The coils 26 face the reaction plates 25 from below in a closely spaced relationship.

The reaction plates 25 may be composite conductors comprising a combination of a copper or aluminium plate through which induction current can easily flow with an iron plate through which magnetic flux can easily pass. In general, the iron plate is thicker than the copper or aluminium plate to produce the desired strength.

Provided at the inner side surface of the one of the girders 6 are three feeder wires 28 extending along the rails 22 which guide the travelling wheels 23 of the trolley 7. The feeder wires 28 are supplied with three-phase alternating current via an inverter from a power source (not shown).

The trolley 7 is provided, on its side surface opposed to the feeder wires 28, with current collectors 29 which are in sliding contact with the feeder wires 28 and pick up electric power from them. The three-phase alternating current received by the collectors 29 is supplied to each of the coils 26.

Thus, with the voltage and frequency of the current being adequately controlled by the inverter, the three-phase alternating current is supplied through the feeder wires 28 and the current collectors 29 to each of the coils 26 on the trolley 7, so that a magnetic field travelling in the traverse direction of the trolley 7 is generated by the coils 26. The travelling magnetic fields thus generated induce eddy currents in the reaction plates 25 on the girders 6. As a result, a thrust force is generated in accordance with Fleming's left-hand rule and, in reaction thereto, the trolley 7 is moved in the traverse direction with respect to the girders 6.

In order to brake the movement of the trolley 7, regenerative braking is employed in which the linear induction motor means 24 is operated to act as a power generator to convert mechanical energy generated by inertia of the trolley 7 to electric energy which is returned to the power source. Mechanical braking may be simultaneously used to maintain the trolley in a defined traverse position.

In this embodiment, the linear induction motor means 24 is used to traverse the trolley 7 so that the traverse speed of the trolley 7 can be increased to an extent unattainable in the known crane and the cycle time of the loading and unloading operations can be reduced.

The traversing system of the present invention has no undesirable influence on the positional control of the trolley 7 due to elongation of ropes and/or wear of sheaves over the course of time, as frequently occurs in conventional rope-towing type traversing systems, so that the traverse position of the trolley can be controlled with greater accuracy than previously. As a result of the fact that the speed control is electrical and by means of the linear induction motor means 24, responsiveness to speed control commands is also improved, so that acceleration or deceleration of the trolley can be adjusted at the appropriate times for the purpose of effecting swing- or oscillation-suppression of suspended cargo with greater precision.

Moreover, there is no need to replace ropes, as is required in the known rope-towing trolley traversing systems, and there are no mechanical moving parts such as a drive motor for a traverse drum, reduction gears and sheaves. Thus, frequent maintenance and inspection of mechanical moving parts is not necessary, which makes it possible to substantially reduce the effort and expense associated with maintenance and inspection.

Furthermore, there is no need to provide a traverse drum, a drive motor, reduction gears, etc. in the machine room, unlike the known system, so that the machine room can be smaller than previously.

Also, in the above embodiment, the reaction plate 25 is made of a composite conductor which is a combination of a copper or aluminium plate, which is of low resistivity, with an iron plate through which magnetic flux can easily pass, i.e. is of high permeability, and the iron plate is preferably thicker than the copper or aluminium plate to produce the desired strength. A vertical electromagnetic force acts as a suction or attractive force between the reaction plates 25 and the coils 26, so that the coils 26 on the trolley 7 are attracted upwardly towards the reaction plates 25 on the lower surfaces of the girders 6, thereby applying a lifting force to the trolley 7. This reduces the load applied to the wheels 23 of the trolley 7.

More specifically, the vertical electromagnetic force generated together with the thrust force acts as an attractive or repulsive force on the reaction plate 25 when it is made of a magnetic and non-magnetic substance, respectively. When the reaction plate 25 is a composite conductor made of magnetic and non-magnetic substances, any difference between the attractive and repulsive forces applied to each conductor acts as electromagnetic vertical force. The vertical electromagnetic force acts as an attractive force when the iron plate is thicker than the copper or aluminium plate which is non-magnetic and of high permeability.

As mentioned above, the reaction plate 25 is a composite conductor with the iron plate generally being thicker than the copper or aluminium plate and therefore the electromagnetic vertical force generated between the reaction plates 25 and the coils 26 acts as an attractive force. However, it is also possible that the copper or aluminium plate is thicker than the iron plate and that the electromagnetic vertical force acts as a repulsive force. In this case, the reaction plates 25 are arranged on the upper surfaces of the girders 6, and the coils 26 on the trolley 7 face the reaction plates 25 from above. A lifting force is then applied to the trolley 7 as in the case of the above embodiment, which reduces the load applied to the wheels 23 of the trolley 7.

Figures 5 and 6 illustrate a second embodiment of the present invention in which the arrangement of the reaction plates 25 and the coils 26 is the opposite of that of the first embodiment. More specifically, coils 26 which constitutes the primary component of the linear induction motor means 24 are arranged on the lower surface of the girders 6 over the traverse range of the trolley 7. Reaction plates 25, which constitutes the secondary component of the linear induction motor means 24, are arranged on the lower surface of the trolley 7 at its respective corners via brackets 27 to face the coils 26 from below in a closely spaced relationship.

The reaction plates 25 in this second embodiment are again made of a combination of a copper or aluminium plate with an iron plate, and the iron plate is thicker than the copper or aluminium plate.

In order to eliminate unnecessary excitation of the coils 26 at positions remote from the current position of the trolley 7 and thus to reduce power consumption and heat generation as much as possible, it is preferred that the coils 26 are arranged on the lower surfaces of the girders 6 in longitudinal blocks which may be selectively energised and that three-phase alternating current is supplied from the power source via the inverter only to those selected blocks of coils 26 whose position corresponds to the current traverse position of the trolley 7.

Thus, with the voltage and frequency appropriately controlled by the inverter, three-phase alternating current is supplied to the selected blocks of coils corresponding to the traverse position of the trolley 7 to generate magnetic fields at the selected blocks of coils 26 moving in the traverse direction of the trolley 7. This induces eddy currents in the reaction plates 25 on the trolley 7, so that a thrust force is generated in accordance with Fleming's left-hand rule and, in reaction thereto, the trolley 7 is traversed or moved in the traverse direction with respect to the girders 6. The second embodiment can therefore attain the same effects as the first embodiment as described above.

Figures 7 and 8 illustrate a third embodiment of the invention in which the reaction plates 25 are arranged symmetrically on the inner side surfaces of the girders 6 at positions lower than the rails 22 over the traverse range of the trolley 7. The coils 26 are arranged symmetrically on opposite ends of the trolley 7 laterally opposed to the reaction plates 25 in a closely spaced relationship.

Similarly to the first embodiment, one of the girders 6 has, on its inner surface at positions higher than the rails 22, three feeder wires 28 extending along the rails 22. Three-phase alternating current is supplied to the feeder wires 28 via the inverter from the power source (not shown).

Provided on the trolley 7 at positions opposed to each of the feeder wires 28 are current collectors 29 which are arranged to receive current in sliding contact with the feeder wires 28, and the three-phase alternating current received by the collectors 29 is supplied to each of the coils 26.

The operation and advantage of this embodiment are substantially the same as with the preceding embodiments. The sets of the coils 26 and the reaction plates 25 are arranged at symmetrical positions at opposite sides of the trolley 7, so that the electromagnetic forces generated in opposite directions at opposite sides of the trolley 7 are in balance.

Figures 9 and 10 illustrate a fourth embodiment in which the arrangement of the reaction plates 25 and the coils 26 in the third embodiment is reversed. Thus the coils 26 are arranged symmetrically on the inner side surfaces of the girders 6 at positions lower than the rails 22 over the traverse range of the trolley 7. The reaction plates 25 are arranged symmetrically on opposite ends of the trolley 7, laterally opposed to the reaction plates 25 in a closely spaced relationship.

In this embodiment, as in the second embodiment, in order to eliminate unnecessary excitation of the coils 26 at positions remote from the present position of the trolley 7 and to reduce power consumption and heat generation as much as possible, it is preferred that the coils 26 are arranged in longitudinal blocks on the girders 6, which blocks may be selectively energised. In use, three-phase alternating current is supplied from the power source via the inverter only to selected blocks of coils 26 corresponding to the present traverse position of the trolley 7.

The operation and advantages of the fourth embodiment are substantially the same as those of the preceding embodiments.

It will be understood that the present invention is not limited to the embodiments described above and that various modifications may be made without departing from the scope of the invention. For example, the invention may be applied to a trolley mounted on girders in an overhead crane or a monorail type trolley on a single girder.

## Claims

1. A crane including one or more girders (6), a trolley (7) mounted on the girder(s) to be movable along their length in a traverse direction and actuating means (24) arranged to move the trolley (7) along the girder(s), characterised in that the actuating means comprises linear induction motor means (24) including a primary component in the form of coils (26) and a secondary component in the form of reaction plates (25), one of the primary and secondary components (25, 26) being arranged on the girder(s) (6) over the traverse range of the trolley (7), the other of the primary and secondary components (25, 26) being arranged on the trolley (7) and opposed to the said one of the components in a closely spaced relationship.

2. A crane as claimed in Claim 1 wherein the reaction plates (25) are arranged on the upper or lower surfaces of the girder(s) (6) and the coils (26) are arranged on the trolley (7) and are vertically opposed to the reaction plates (25).

3. A crane as claimed in Claim 1 wherein the coils (26) are arranged on the upper or lower surfaces of the girder(s) (6) and the reaction plates (25) are arranged on the trolley (7) and are vertically opposed to the coils (26).

4. A crane as claimed in Claim 1 wherein the reaction plates (25) are arranged on side surfaces of the girders (6) and the coils (26) are arranged on the trolley (7) and are laterally opposed to the reaction plates (25).

5. A crane as claimed in Claim 1 wherein the coils (26) are arranged on side surfaces of the girders (6) and the reaction plates (25) are arranged on the trolley (7) and are laterally opposed to the coils (26).

6. A crane as claimed in Claim 4 or 5 wherein the coils (26) and the reaction plates (25) are arranged at symmetrical positions.

7. A crane as claimed in Claim 2 or 3 wherein the reaction plates (25) are composite conductors comprising a metal of low resistivity, e.g. copper or aluminium, and a metal of high permeability, e.g. iron.

8. A crane as claimed in Claim 7 in which the coils (26) or reaction plates (25) are arranged on the lower surface of the girder(s) (6) and the portion of the reaction plates (25) which is of high permeability is thicker than the portion of low resistivity.

9. A crane as claimed in Claim 7 in which the coils (26) or reaction plates (25) are arranged on the upper surface of the girder(s) (6) and the portion of the reaction plates (25) which is of high permeability is thinner than the portion of low resistivity.

10. A crane as claimed in Claims 3 or 5 in which the coils (26) are arranged in a plurality of blocks, the electrical connections of the blocks being such that the blocks are selectively energisable.
